# EUROPEAN PATENT APPLICATION

(11) **EP 1 096 713 A2**
(43) Date of publication of application: **02.05.2001**
(21) Application number: 00309452.1
(22) Date of filing: 26.10.2000
(51) Int. Cl.: H04J 14/02

(54) **Optical add/drop multiplexer**

(30) Priority: 26.10.1999 JP 30328099
(71) Applicant: NEC CORPORATION, Tokyo (JP)
(72) Inventor: Yoshizawa, Nobukazu, Minato-ku, Tokyo (JP); Iwano, Tadayuki, c/o NEC Corporation, Tokyo (JP)
(74) Representative: Moir, Michael Christopher

(57) **Abstract**

An optical add/drop multiplexer (OADM) is provided with an optical demultiplexer (ODMX), an optical coupler, a 2-input/1-output optical switch (2 X 1 SW) and an optical multiplexer (OMUX), respectively cascaded. The OADM demultiplexes a wavelength-multiplexed optical signal. The optical coupler branches a demultiplexed optical signal into first and second branched optical signals. The second branched optical signal is a drop signal. The first branched optical signal and an add signal are incident on the 2 X 1 SW. When the add signal is output from the switch, the OMUX multiplexes the add signal and other optical signals, and outputs the result to an optical transmission line as a wavelength-multiplexed optical signal.

## Description

### BACKGROUND OF THE INVENTION

### 1. Field of the Invention

The present invention relates to an optical add/drop multiplexer (hereinafter called OADM), and particularly relates to an optical add/drop multiplexer suitable for an optical communication system to which dense wavelength-division multiplex (hereinafter called D-WDM) is applied.

### 2. Description of the Related Prior Art

An optical communication system has been essential for the communication of multimedia information such as voice and an image. Particularly, a D-WDM system of multiplexing and transmitting plural optical signals different at a very short wavelength interval is suitable for a long distance/mass optical communication system. Normally, an OADM that extracts an optical signal of a specific wavelength (a specific channel) from a transmitted wavelength multiplexed optical signal or adds an optical signal of another specific wavelength to a wavelength multiplexed optical signal is installed at a repeater site of an optical transmission line for transmitting wavelength multiplexed optical signals. A well-known OADM of arbitrarily selective type is provided with an optical demultiplexer (hereinafter called ODMX), an optical multiplexer (hereinafter called OMUX) and 2-input/2-output optical switch (hereinafter called 2 x 2 SW) installed between these. A well-known arrayed waveguide grating (hereinafter called AWG) may be also used for ODMX and OMUX. AWG is plural parallel optical waveguides formed on a plane substrate for example, and each waveguide is arranged so that it is different from an adjacent waveguide in an optical path length by predetermined quantity. Therefore, AWG causes similar dispersion to a diffraction grating by a phase shift caused between each waveguide, and can demultiplex input wavelength-multiplexed light.An ODMX demultiplexes each optical signal from a wavelength-multiplexed optical signal,including plural optical signals having different wavelengths. A predetermined optical signal demultiplexed by ODMX is incident on a first input port of 2 x 2 SW. An add signal added to a wavelength multiplexed optical signal is incident on a second input port of 2 x 2 SW. A through signal (hereinafter a THR signal) multiplexed by OMUX is output from a first output port of 2 x 2 SW, and a drop signal extracted from a wavelength-multiplexed optical signal may be output from a second output port. 2 x 2 SW varies the intensity of the interference of optical signals input from two input terminals by applying heat, voltage or magnetism to an inside wavelength for transmitting an optical signal,and can apply polarity to these optical signals. Therefore, the input two optical signals are selectively output from two output terminals. A THR signal output from 2 x 2 SW is incident on OMUX. OMUX multiplexes this THR signal and another optical signal demultiplexed by ODMX . In case AWG is used for OMUX, the arrangement is reverse to the arrangement in case AWG is used for ODMX . OADM is provided with plural 2 x 2 SWes and can extract plural optical signals or can add them. In Japanese published unexamined patent application No. Hei 11-202152, OADM provided with two 2 x 2 SWes is disclosed.

However, in 2 x 2 SW used for well-known OADM, two 2-input/1-output optical switches (hereinafter called 2 x 1 SW) are arranged so that the respective one output terminals are opposite and are connected in series. An optical signal of a specific wavelength and an add signal are respectively incident from two input terminals of first 2 x 1 SW and either optical signal is selectively output. The output optical signal is incident on one output terminal of second 2 x 1 SW and is output from either of the two input terminals. However, the configuration of such 2 x 2 SW is complex, compared with that of 2 x 1 SW, is inferior in reliability, and the cost is higher. That is, the consistency of the waveguides of two 2 x 1 SWes is required to be kept, and isolation is required to be enhanced to avoid crosstalk. OADM disclosed in Japanese published unexamined patent application No. Hei 10-511821 and configured so that a signal of each wavelength component is demultiplexed from a wavelength multiplexed optical signal by combining a fiber grating (hereinafter called FBR), light and a circulator is also provided with 2 x 2 SW, and has a problem similar to that described above.

### SUMMARY OF THE INVENTION

Therefore, the present invention provides OADM the reliability of which is high and the cost of which is low,without using 2 x 2 SW. An optical add/drop multiplexer (OADM) according to the invention is provided with an optical demultiplexer (ODMX ), a 2 x 1 optical switch and an optical multiplexer (OMUX), and is further provided with an optical coupler that branches a predetermined optical signal of optical signals which an optical demultiplexer demultiplexes from wavelength-multiplexed signal light into first and second branched optical signals. The first branched optical signal branched by the optical coupler and an optical signal to be added to the wavelength-multiplexed signal are incident on the 2 x 1 optical switch, and the switch selectively outputs either optical signal. OMUX multiplexes an optical signal selectively output from the optical switch and optical signals demultiplexed by ODMX except an optical signal incident on the optical coupler. OMUX can multiplex optical signals selectively output from optical switches and optical signals and optical signals demultiplexed by ODMX . Or OMUX can multiplex only an optical signal selectively output from the optical switch. In a concrete example, at least one of ODMX and OMUX can utilize an arrayed waveguide grating. ODMX can be provided with an optical coupler and an optical band-pass filter for selecting an optical signal of a specific wavelengths or can be provided with an optical circulator and a fiber grating for reflecting only an optical signal of a specific wavelength. OADM can be provided with plural optical couplers and plural corresponding 2 x 1 optical switches. Also, OADM can be provided with an optical coupler and a 2 x 1 optical switch for all optical signals demultiplexed from wavelength--multiplexed signal light. This OADM can be provided with a variable optical attenuator and an optical amplifier as means for regulating the level of an optical signal output from the 2 x 1 optical switch. The optical coupler can set the branching ratio so that the second branched optical signal is in a range of the receiving level of a receiver for receiving the second branched optical signal. Such OADM has high reliability and low cost.

### BRIEF DESCRIPTION OF THE DRAWINGS

Preferred features of the present invention will now be described, by way of example only, with reference to the accompanying drawings, in which:-
FIG. 1 is a block diagram showing a conventional-type optical add/drop multiplexer (OADM);
FIGS. 2A and 2B are block diagrams showing an optical add/drop multiplexer (OADM) equivalent to an embodiment of the invention;
FIG. 3 is a block diagram showing an optical add/drop multiplexer (OADM) provided with a variable optical attenuator; and
FIG. 4 is a block diagram showing an optical add/drop multiplexer (OADM) provided with an optical amplifier.

### DETAILED DESCRIPTION OF THE PREFERRED EMBODIMENTS

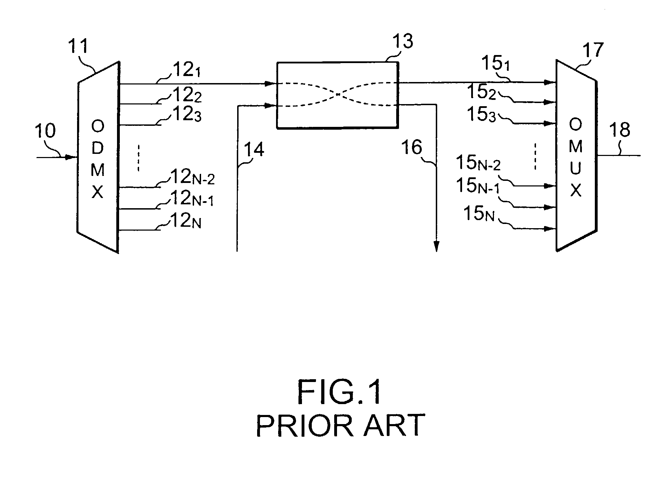

Referring to FIG. 1, a conventional type optical add/drop multiplexer (OADM) is provided with an optical demultiplexer (ODMX ) 11, a 2 x 2 optical switch (2 x 2 SW) 13 and an optical multiplexer (OMUX) 17. ODMX 11 demultiplexes optical signals 12₁ to 12_{N} respectively having a wavelength of λ1 λ2, ---, λN from a wavelength-multiplexed optical signal 10. The demultiplexed optical signal 12₁ having the wavelength of λ1 is incident on one of two input terminals of the 2 x 2 SW 13. An add signal 14 added to a wavelength multiplexed signal is incident on the other input terminal of the 2 x 2 SW 13. A through signal (hereinafter called a THR signal) 15₁ is output from one of two output terminals of the 2 x 2 SW 13 and the THR signal is multiplexed with other demultiplexed optical signals by the OMUX 17. A drop signal 16 can be output from the other output terminal of the 2 x 2 SW 13. Therefore, the 2 x 2 SW 13 can output the add signal 14 as a THR signal or can output the demultiplexed optical signal 12₁ having the wavelength λ1 as a drop signal 16.

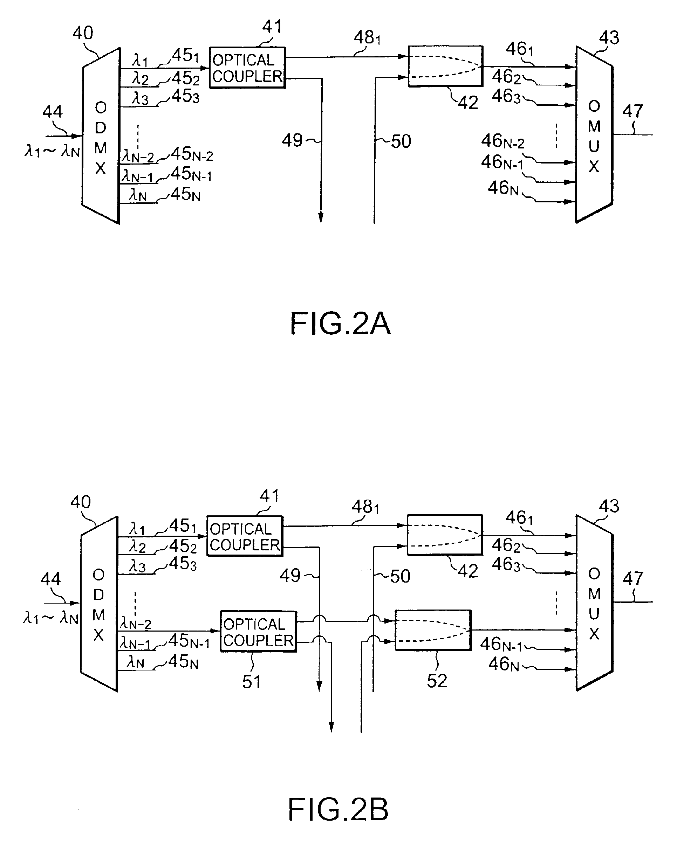

Referring to FIG. 2A, in an OADM equivalent to the first embodiment of the invention, ODMX 40, an optical coupler 41, 2 x 1 SW 42 and OMUX 43 are cascaded. A wavelength-multiplexed optical signal 44 composed of optical signals of different wavelengths λ1 to λN according to a D-WDM system is incident on ODMX 40. ODMX 40 demultiplexes the wavelength-multiplexed optical signal 44 into N portions of optical signal of wavelengths 1λ to λN. Specific optical signal 45₁ (optical signal of the wavelength λ1 in an example shown Fig. 2) of the demultiplexed optical signal is incident on the optical coupler 41. The optical coupler 41 branches the incident optical signal 45₁ into two optical signals 48₁ and 49 according to a branching ratio determined beforehand. One optical signal 48₁ of these two branched optical signals and the other optical signal 50 are incident from two input terminals of the 2 x 1 SW 42. The 2 x 1 SW 42, a well-known optical switch, selects one of the optical signals input from the two input terminals by applying heat, voltage or magnetism and other means to an optical waveguide and varying the intensity of interference between optical signals of each wavelength or by mechanically switching an optical path, and outputs the selected signal from the output terminal. OMUX 43 multiplexes incident N-portions of optical signals and outputs the result as a wavelength-multiplexed optical signal 47. A well-known arrayed waveguide grating (AWG) for example is used for ODMX 40 and OMUX 43. AWG demultiplexes input wavelength-multiplexed light; however, when the input side and the output side of AWG are reversely installed, AWG multiplexes optical signals of each wavelength and can output wavelength-multiplexed light. ODMX 40 can be configured so that it is provided with an optical coupler for branching a wavelength-multiplexed optical signal by the number of each optical signal and an optical band-pass filter for selecting an optical signal of a specific wavelength of each branched optical signal in addition to AWG described above. Further, ODMX 40 can extract each optical signal by a connecting configuration, including an optical circulator and a fiber grating that reflects only an optical signal of a specific wavelength by the number of optical signal. The two configurations described above are also well-known as AWG.

The operation of an OADM is as follows. ODMX 40 demultiplexes the wavelength multiplexed optical signal 44 into N portions of optical signals of wavelengths λ1 to λN. In case the optical signal 45₁ of the wavelength λ1 is a drop signal, the optical coupler 41 is attached to the terminal from which the optical signal 45₁ is output of ODMX 40. The optical coupler 41 branches the optical signal 45₁ into two branched optical signals 48₁ and 49 of the same wavelength λ1 according to a branching ratio determined beforehand. The branched optical signal 49 is sent to a receiver as a drop signal. The branching ratio of the optical coupler 41 is set so that the level of the drop signal 49 is in a range of the receiving level of the receiver that receives this signal. Then, as the level of a signal input to the receiver is not required to be regulated, the receiver can be simplified. Branched optical signal 48₁, as a THR signal output from the optical coupler 41, is incident on one of the two input terminals of 2 x 1 SW 42. Also, an optical signal 50, which is an add signal, is incident on the other input terminal. In a case where 2 x 1 SW 42 is set so that it outputs the optical signal 50 of these two input signals, the optical signal 50 is output from 2 x 1 SW 42 as an add signal, is multiplexed by OMUX 43, and is added to a wavelength-multiplexed optical signal transmitted on an optical-signal transmission line. Also when no add operation is executed, 2 x 1 SW 42 outputs the branched light signal 48₁ (that is, the optical signal 45₁). Therefore, OMUX 43 multiplexes the optical signal 45₁ together with other optical signals and outputs the wavelength-multiplexed optical signal 47. As described above, since the OADM described above is provided with the optical coupler and a 2 x 1 SW in place of a 2 x 2 SW inferior in reliability, the cost can be reduced and the reliability can be enhanced.

Referring to FIG. 2B, an OADM of a second embodiment is provided with two optical couplers 41 and 51 and two 2 x 1 SWes 42 and 52. For example, when OADM drops an optical signal to plural receivers, such configuration is utilized. FIG. 2B also shows that an optical coupler and a 2 x 1 SW can be respectively arranged from all optical signals comprising a wavelength-multiplexed optical signal. In a case where an optical coupler and a 2 x 1 SW are arranged for all optical signals, the integration of the OADM is facilitated.

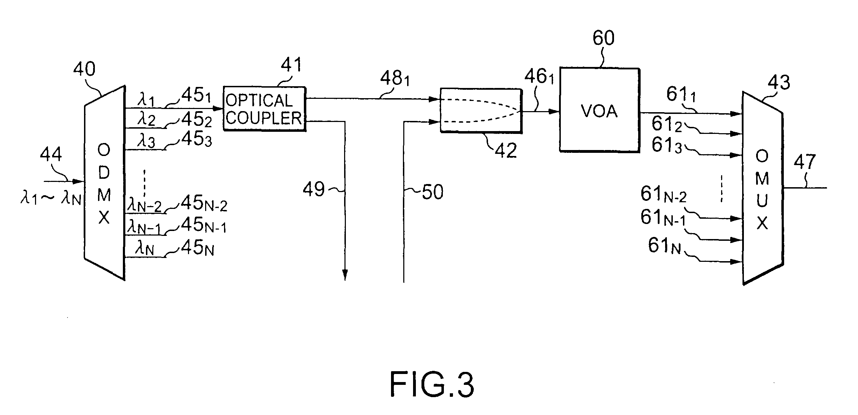

Referring to FIG. 3, an OADM is provided with a variable optical attenuator (hereinafter called a VOA) 60 between 2 x 1 SW 42 AND OMUX 43. VOA 60 can vary the level of an input optical signal so that it is at a predetermined attenuation level. Therefore, the input level of OMUX 43 can be fixed and the output level can be fixed.

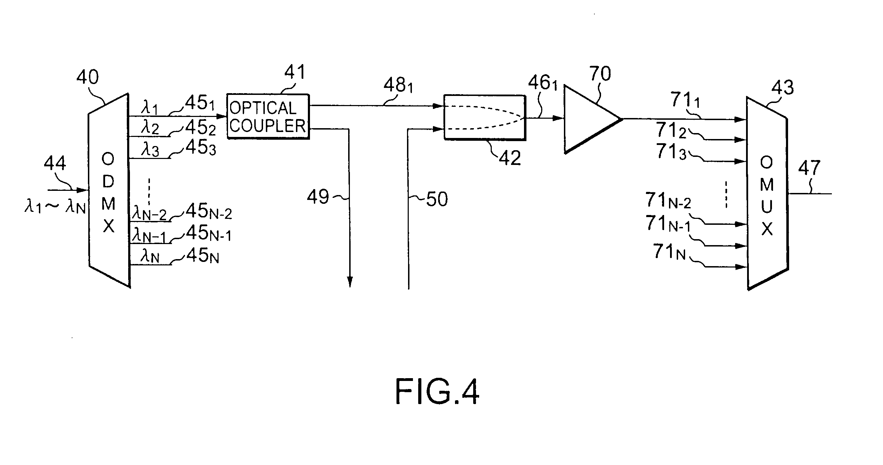

Referring to FIG. 4, an OADM is provided with an optical amplifier 70 between 2 x 1 SW 42 and OMUX 43. A semiconductor optical amplifier or an erbium-doped fiber (hereinafter called EDF) amplifier can be utilized for the optical amplifier 70. The amplification level of the optical amplifier 70 is variable, and the optical amplifier varies the level of an input optical signal according to a set condition so that it is at a predetermined amplification level. The optical amplifier 70 can amplify the level of an input optical signal up to a predetermined level and can fix the input level of OMUX 43.

As described above, a VOA and the optical amplifier regulate the level of an add signal output from 2 x 1 SW 42. A VOA is installed for some 2 x 1 Swes 42, and the optical amplifier can be installed for the other 2 x 1 SWes 42.

Since an OADM according to the invention is provided with the optical coupler and a 2 X 1 SW in place of a 2 X 2 SW inferior in reliability, the cost is low and the reliability is improved. Therefore, it is suitable for an optical communication system according to the D-WDM system.

While the present invention has been described in connection with certain preferred embodiments, it is to be understood that the subject-matter encompassed by the present invention is not limited to those specific embodiments. On the contrary, it is intended to include all alternatives, modifications and equivalents as can be included within the scope of the following claims.

Each feature disclosed in this specification (which term includes the claims) and/or shown in the drawings may be incorporated in the invention independently of other disclosed and/or illustrated features.

The text of the abstract filed herewith is repeated here as part of the specification.

An optical add/drop multiplexer (OADM) is provided with an optical demultiplexer (ODMX), an optical coupler, a 2-input/1-output optical switch (2 X 1 SW) and an optical multiplexer (OMUX), respectively cascaded. The OADM demultiplexes a wavelength-multiplexed optical signal. The optical coupler branches a demultiplexed optical signal into first and second branched optical signals. The second branched optical signal is a drop signal. The first branched optical signal and an add signal are incident on the 2 X 1 SW. When the add signal is output from the switch, the OMUX multiplexes the add signal and other optical signals, and outputs the result to an optical transmission line as a wavelength-multiplexed optical signal.

## Claims

1. An optical add/drop multiplexer provided with an optical demultiplexer, an optical switch and an optical multiplexer, also comprising:
an optical coupler that branches a predetermined optical signal, of optical signals demultiplexed from wavelength-multiplexed signal light by the optical demultiplexer, into first and second branched optical signals;
wherein:
the optical switch is a 2-input/1-output optical switch, the first branched optical signal and an optical signal to be added to the wavelength-multiplexed signal are incident on the optical switch, and the optical switch selectively outputs either optical signal.

2. An optical add/drop multiplexer according to Claim 1, further comprising:
one or more additional optical couplers; and,
a corresponding number of additional 2-input/1-output optical switches, each respectively connecting to one of the additional optical couplers;
wherein:
optical signals of different wavelengths are incident on each optical coupler.

3. An optical add/drop multiplexer according to Claim 2, wherein:
optical couplers and 2-input/1-output optical switches are respectively arranged for all optical signals demultiplexed from wavelength-multiplexed signal light.

4. An optical add/drop multiplexer according to Claim 1, wherein:
the optical multiplexer multiplexes the optical signal selectively output from the optical switch and optical signals demultiplexed by the optical demultiplexer except the predetermined optical signal.

5. An optical add/drop multiplexer according to Claim 1 or 2, wherein:
the optical multiplexer multiplexes optical signals selectively output from the 2-input/1-output optical switch and optical signals demultiplexed by the optical demultiplexer.

6. An optical add/drop multiplexer according to Claim 3, wherein:
an optical multiplexer multiplexes optical signals selectively output from a 2-input/1-output optical switch.

7. An optical add/drop multiplexer according to Claim 1, further comprising:
means for regulating the level of an optical signal output from a 2-input/1-output optical switch.

8. An optical add/drop multiplexer according to Claim 7, wherein:
the means for regulating the level of an optical signal output is a variable optical attenuator.

9. An optical add/drop multiplexer according to Claim 7, wherein:
the means for regulating the level of an optical signal output is an optical amplifier.

10. An optical add/drop multiplexer according to Claim 1, wherein:
the branching ratio of an optical coupler is set so that a second branched optical signal is in a range of the receiving level of a receiver that receives the optical signal.

11. An optical add/drop multiplexer according to Claim 1, wherein:
at least one of the demultiplexer and the multiplexer is an arrayed waveguide grating.

12. An optical add/drop multiplexer according to Claim 1, wherein:
an optical demultiplexer is provided with an optical coupler and an optical band-pass filter that selects an optical signal of a specific wavelength.

13. An optical add/drop multiplexer according to Claim 1, wherein:
an optical demultiplexer is provided with an optical circulator and a fiber grating that reflects only an optical signal of a specific wavelength.
